(19) **Europäisches Patentamt**

**European Patent Office**

**Office européen des brevets**

(11) **EP 0 755 629 B1**

(12) **EUROPÄISCHE PATENTSCHRIFT**

(45) Veröffentlichungstag und Bekanntmachung des Hinweises auf die Patenterteilung:
**15.12.1999 Patentblatt 1999/50**

(51) Int. Cl.$^6$: **A23B 7/005**, A23L 3/015

(21) Anmeldenummer: **96110535.0**

(22) Anmeldetag: **28.06.1996**

(54) **Verfahren zur Herstellung von Lebensmittelzubereitungen, insbesondere Fruchtzubereitungen**

Method for the preparation of food compositions, in particular of fruit compositions

Méthode pour la préparation de compositions alimentaires, particulierement de compositions de fruits

(84) Benannte Vertragsstaaten:
**DE FR GB IT**

(30) Priorität: **26.07.1995 DE 19527342**

(43) Veröffentlichungstag der Anmeldung:
**29.01.1997 Patentblatt 1997/05**

(73) Patentinhaber:
**Hermann Waldner GmbH & Co.**
**88231 Wangen im Allgäu (DE)**

(72) Erfinder:
**Wulf, Günter, Dipl.-Ing.**
**88239 Wangen im Allgäu (DE)**

(74) Vertreter:
**Eder, Eugen, Dipl.-Ing.**
**Patentanwälte**
**Eder & Schieschke**
**Elisabethstrasse 34**
**80796 München (DE)**

(56) Entgegenhaltungen:
EP-A- 0 021 629          EP-A- 0 197 805
EP-A- 0 266 141          DE-A- 4 313 618
US-A- 3 754 466          US-A- 5 284 085

- DATABASE WPI Section Ch, Week 8714 Derwent Publications Ltd., London, GB; Class D13, AN 87-096952 XP002014233 & JP-A-62 044 133 (YG KUWAHARA SHOKUHI) , 26.Februar 1987

**Beschreibung**

Die Erfindung betrifft ein Verfahren zur Herstellung von Lebensmittelzubereitungen, insbesondere Fruchtzubereitungen, durch Erhitzen und anschließendem Kühlen unter gleichzeitigem Mischen einer Gutmenge nach dem Oberbegriff des Anspruchs 1. Weiterhin betrifft die Erfindung eine Vorrichtung zur Durchführung dieses Verfahrens mit einem beheiz- und/oder kühlbaren geschlossenen Behälter und einem Rührsystem.

Es ist bereits ein derartiges Verfahren mit Vakuum und einem Druckwechselvorgang bekannt (US-A-3 754 466)

Zum Stand der Technik zählt weiterhin ein Verfahren und die zugehörige Vorrichtung (DE 43 13 618 A1), indem eine Gutmenge in einem geschlossenen Behälter unter Vakuumanwendung auf Sterilisiertemperatur erhitzt und anschließend auf Abfülltemperatur gekühlt wird. Unter dem Einfluß des Vakuum in der Aufheizphase auf Pasteurisiertemperatur steigen vermehrt Brüden von der Gutmenge auf. Da diese Brüden zum Teil vor Erreichen einer Sterilisiertemperatur aufsteigen und durch Kondensieren eine bedeutend geringere Temperatur als die Gutmenge besitzen, könnten sie die sterilisierte Gutmenge durch ihr Zurückfallen nach Abkühlung nachteiligerweise nachträglich kontaminieren.

Aus diesem Grund werden in der Heizphase die aufsteigenden Brüden von einem zentrisch im Oberboden angeordneten Ventilator gegen die auf Sterilisiertemperatur beheizten Innenwände gewirbelt und so durch einen Wärmeübergang sterilisiert. In der Kühlphase wird durch ein Vakuum eine schnelle Kühlung erreicht, indem aufsteigende Brüden gegen die gekühlten Innenwände im Behälter gewirbelt und durch eine Wärme- bzw. Kälteübergang gekühlt werden.

Durch die zentrische Anordnung des Ventilators im Oberboden ist allerdings eine Anordnung eines Ankerrührwerks mit einer Welle zentrisch durch diesen Oberboden nicht mehr möglich. In der DE 43 13 618 A1 wurde deshalb ein Rührwerk mit doppeltwirkender Gleitringdichtung im Produktraum zentrisch im Unterboden eingebaut.

Nachteiligerweise kann dieses Rührwerk z.B. durch abrasive Produkte mechanisch beschädigt werden. Weiterhin ist durch diese Anordnung des Rührwerks ein zentrischer, an tiefster Stelle angeordneter Bodenauslauf nicht mehr möglich.

Ebenfalls ist bei dem bekannten System der Heizmantel im Verhältnis zum Produktinhalt relativ klein, wodurch eine entsprechend lange Aufheizzeit bedingt ist.

Weiterer Stand der Technik sind Verfahren bzw. Vorrichtungen zur Behandlung von Lebensmitteln in verschiedenen Varianten (US-A-5 284 085, EP-A-0 021 629, EP-A-0 266 141, EP-A-0 197 805, WPi abstract v. JP-A-62044133)

Der vorliegenden Erfindung liegt dangegenüber die Aufgabe zugrunde, ein Verfahren zur Herstellung von Lebensmittelzubereitungen, insbesondere Fruchtzubereitungen, zu schaffen, das gegenüber bekannten Verfahren eine Verbesserung der Produktqualität ermöglicht. Des weiteren liegt der Erfindung die Aufgabe zugrunde, eine Vorrichtung zur einfachen Durchführung dieses Verfahrens zu schaffen.

Die Aufgabe wird erfindungsgemäß mit den Merkmalen des Verfahrensanspruchs 1 bzw. des Vorrichtungsanspruchs 5 gelöst.

Durch Druckwechselvorgänge nach einer vorbestimmten Zeitabhängigkeit wird bei Druckerhöhung Luft und die flüssige wäßrige Phase aus dem in der Gutmenge vorhandenen stückigen Gut herausgepreßt und bei Druckverringerung das in der Gutmenge vorhandene Fluid, z.B. eine viskose Lösung mit entsprechend hohem Zuckergehalt von beispielsweise 60 % und/oder einem Alkoholgehalt, in das stückige Gut eingesaugt. Dadurch erreicht man zum Beispiel in einer Erdbeerzubereitung mit niedrigem Zuckergehalt, von beispielsweise 10 %, eine Steigerung des Zuckergehalts von 10 auf 40 - 50 Prozent.

Diese Kandierung ist gleichbedeutend mit einer Verfestigung des Gutes, z.B. des Fruchtfleisches von Erdbeeren. Dies hat zur Folge, daß das Produkt in der Kühlphase, insbesondere bei einer Vakuumkühlung, stabiler gegen den Stress der Kühlung ist. Das Resultat der Druckwechselvorgänge ist also eine höhere Stückigkeit des Endprodukts und damit gleichbedeutend mit einer wesentlichen Verbesserung der Produktqualität.

Durch die Aufnahme eines Fluids mit anderen Bestandteilen, z.B. Alkohol o.a., besteht die Möglichkeit besondere oder verbesserte Produkte von Lebensmittelzubereitungen zu schaffen. Beispielsweise ist es denkbar den Alkoholgehalt von Früchten eines Rumtopfs in kurzer Zeit zu erhöhen.

Der Druckwechsel kann zwischen einem vorbestimmten Druck $P_1$ und $P_2$, also mit dem vorbestimmten Hub $\Delta P(=P_1-P_2)$, insbesondere zwischen einem Druck von 2 bar und einem Vakuum beispielsweise innerhalb einer Minute, erfolgen. Weiter kann der Druckwechsel periodisch erfolgen, mit z.B. vorbestimmter Steigung der Flanken und einer Periodendauer von beispielsweise 2 Minuten. Jedes bzw. jede Kombination dieser Verfahren tragen zu einer weiteren Verbesserung des Verfahrens bei, indem die Druckwechselvorgänge optimal an die Produktqualität der eingebrachten Gutmenge angepaßt werden können.

Die Druckwechselvorgänge können dabei ab einer bestimmten Temperatur von z.B. 60°C während der Heizphase einsetzen und/oder während der Kühlphase bis zu einer Temperatur von z.B. 70°C erfolgen. Die Temperatur hängt dabei von der Konsistenz der Gutmenge ab, d.h. je flüssiger, desto geringer die Temperatur. Sinnvoll- aber nicht notwendigerweise erfolgen die Druckwechsel über die gesamte Zeit vom Aufheizen bis zum Abkühlen der Gutmenge.

Um längere Wartezeiten während des Aufheizens zu vermeiden, ist es möglich, die Gutmenge in einem separaten Kocher, vorteilhafterweise bis zu der Temperatur, bei der Druckwechselvorgänge sinnvoll wirken können, vorzukochen. Denkbar ist auch ein Verfahren mit separatem Vorkochen mit Druckwechselvorgängen. Ein separates Vorkochen könnte auch eigenständig und unabhängig benutzt werden.

Durch die Ausstattung einer Vorrichtung zur Herstellung von Lebensmittelzubereitungen, insbesondere Fruchtzubereitungen - wobei die Vorrichtung einen beiheiz- und/oder kühlbaren geschlossenen Behälter und einem Rührsystem umfaßt - mit einer steuerbare Einheit zur Veränderung des Drucks im Behälter, wird die Durchführung des erfindungsgemäßen Verfahren ermöglicht. Es treten dabei keine nachteiligen Wirkungen in Bezug Haltbarkeit und Funktion der Vorrichtung auf.

Die Einheit zur Druckveränderung ist in einer Ausführungsform der Erfindung als steuerbare Pumpe mit einem steuerbaren Ventil mit einer manuellen, mechanischen oder elektronischen Steuerung, evtl. mit Software, oder einer Kombination daraus, ausgebildet.

In einer anderen Ausführungsform der Erfindung weist die Einheit zur Druckveränderung eine steuerbare Pumpe mit Vor- und Rücklauf auf, die zusätzlich von einem steuerbaren Ventil unterstützt werden kann. Selbstverständliche ist auch eine reine Alternativlösung mit zwei gegenläufigen Pumpen möglich.

Weiterhin ist es möglich die Einheit zur Druckveränderung ebenfalls mit einem Drucksensor zur Messung des Drucks im Behälter auszustatten.

Durch jedes einzelne bzw. jede Kombination der Austattungmerkmale ist es möglich, die Druckwechselvorgänge optimal in Abhängigkeit von der Produktqualität an die eingebrachte Gutmenge anzupassen.

In einer weiteren Ausführungsform der Erfindung weist die Vorrichtung einen von dem geschlossenen Behälter separaten Kocher auf. Dieser ermöglicht vorteilhafterweise ein schnelleres Aufheizen der Gutmenge auf eine Verarbeitungstemperatur, insbesondere einer Temperatur bei der Druckwechselvorgänge erst sinnvoll werden.

In dem separaten Kocher kann innenliegend ein Heizelement eingebaut sein, das gleichzeitig als Heizorgan und Rührwerk dient. Durch diese einfache bauliche Maßnahme wird weder die Funktion, noch die Haltbarkeit der Vorrichtung beeinflußt. Trotzdem gewährleistet sie ein Erhitzen mit gleichzeitigem Rühren, also eine homogene Erwärmung, und trägt so zur Verbesserung der Produktqualität bei.

Das Heizelement kann dabei als Rohrschlange ausgebildet sein, die von einem Heizmedium, z.B. Dampf, durchströmt und über eine Welle mit einem außen angeordneten Motor angetrieben wird. Dies gewährleistet auf einfache konstruktive Weise ein Heizen mit gleichzeitigem Rühren.

Weiterhin kann der separate Kocher einen doppelten beheizbaren Mantel aufweisen, um vorteilhafterweise in noch kürzerer Zeit die Gutmenge auf eine vorbestimmte Temperatur vorzukochen.

In der besonderen Ausführungsform eines separaten Kochers mit Rohrschlange und Doppelmantel kann so eine 5 mal größere Heizfläche als bei bekannten Systemen realisiert werden, was eine Verkürzung der Aufheizzeit um den Faktor 5 und zur Folge hat.

Es ist auch denkbar, den separaten Kocher ebenfalls mit einer oben beschriebenen steuerbaren Einheit zur Veränderung des Drucks auszustatten.

Der separate Kocher kann dabei selbstverständlich auch unabhängig von dem Druckwechselverfahren und deren Vorrichtung zur Durchführung eingesetzt werden.

In einer Ausführungsform der Erfindung ist im Behälter über dem Gut ein im Oberboden exzentrisch angeordneter Ventilator vorgesehen, der auftretende Brüden zur Innenfläche des Behälters hin- und von dieser Innenfläche wegbewegt. Der Ventilator ist dabei so ausgebildet, daß er auch bei dieser Einbaulage eine intensive, opulente Strömung im Oberboden realisiert.

Durch diese exzentrische Anordnung des Ventilators kann vorteilhafterweise das Rührsystem für das Gut im Behälter zentrisch im Oberboden angeordnet werden. Die oben beschriebenen Nachteile werden so vermieden, ohne die vorteilhafte Wirkung der Vorrichtung auf die Produktqualität einzubüßen.

Ebenfalls kann durch diese Anordnung der geschlossene Behälter am Behälterboden vorteilhafterweise zentrisch, an tiefster Stelle einen Ein- und/oder Auslaß aufweisen.

Durch mindestens einen starren Stromstörer im Behälter kann eine bessere Durchmischung währen des Rühren erreicht werden.

In einer Ausführungsform der Erfindung kann das Rührsystem als Ankerrührwerk ausgebildet ist.

In einer anderen Ausführungsform der Erfindung ist das Rührsystem als koaxiales Rührsystem mit mindestens einem Stromstörer ausgebildet ist, wobei das Rührsystem als Ankerrührwerk und der mindestens eine Stromstörer als gleich- oder gegenläufige Spirale ausgebildet sein kann.

Weitere Ausführungsformen der Erfindung ergeben sich aus den Unteransprüchen.

Die Erfindung wird nachfolgend anhand eines in der Zeichnung dargestellten Ausführungsbeispiels erläutert. In der Zeichnung zeigt:

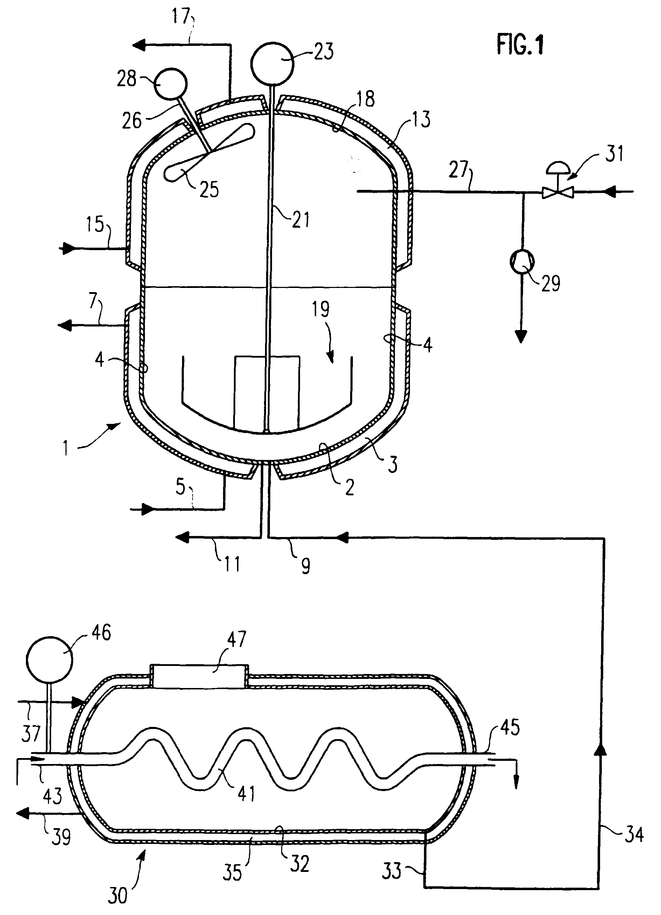

Fig. 1 einen Schnitt durch einen separaten Kocher mit einem Koch-/Kühler.

Die in Fig. 1 dargestellte Vorrichtung weist einen geschlossenen, im wesentlichen zylindrischen Behälter 1 aus Metall auf. In der unteren Hälfte besitzt dieser Behälter einen den Unterboden 2 und die anschließenden Seitenwände 4 bis etwa zur halben Höhe umgebenden ringförmigen Kühl-/Heizmantel 3. Dieser Kühl-/Heizmantel 3 kann über einen Zu- und Ablauf 5, 7 - der an beliebiger Stelle des Kühl-/Heizmantel 3 anordenbar ist - von einem Kühl- bzw. Heizmedium, z.B. gekühltes Wasser bzw. Heißdampf, durchströmt werden und so den üblicherweise maximal nur bis zur Hälfte mit einer Gutmenge gefüllten Behälter 1 beheizen oder kühlen. Zentrisch, an tiefster Stelle weist der Behälter 1 einen Zu- und Ablauf 9, 11 auf, wobei auch ein Zulauf an anderer Stelle, z.B. im Oberboden möglich ist.

In der oberen Hälfte weist der Behälter 1 einen zweiten Kühl-/Heizmantel 13 auf, der über seinen Zu-/Ablauf 15, 17 - der an beliebiger Stelle des Kühl-/Heizmantel 13 anordenbar ist - von einem Kühl- bzw. Heizmedium unabhängig von dem unteren Heiz-/Kühlmantel 3 durchströmt werden kann. Die Zu-/Ableitungen sind hierzu üblicherweise mit nicht näher dargestellten Ventilen ausgestattet.

Zentrisch zum Oberboden 18 ist ein Rührsystem 19 über eine Welle 21 dicht nach außen geführt und wird dort von einem Motor 23 angetrieben. Das in der Zeichnung nur schematisch dargestellte Rührsystem 19 ist z.B. als ein Ankerrührwerk mit koaxialem Stromstörer in Form einer gegenläufigen Spirale ausgeführt.

Exzentrisch neben dem Rührsystem 19 ist im Oberboden 18 ein Ventilator 25 angeordnet, der so ausgebildet ist, daß er auch in dieser Einbaulage in genügender Weise eine intensive und opulente Strömung im Oberboden 18 realisiert. Der Ventilator 25 wird dabei über seine Welle 26 dicht durch den Oberboden 18 von einem außenliegenden Motor 28 angetrieben.

Im oberen Bereich des Behälters 1, der von der Gutmenge nicht bedeckt wird, kann über eine Leitung 27 durch eine steuerbare Vakuumpumpe 29 der Druck im Behälter 1 bis zu einem Vakuum verringert und über ein steuerbares Ventil 31 wieder erhöht, bzw. dem Umgebungsdruck angepaßt werden.

Durch eine nicht näher dargestellte Steuereinheit werden das Ventil 31 und die Pumpe 29 benutzt, um schnelle Druckwechselvorgänge im Behälter 1 zu erzeugen.

Das stückige Gut, z.B. Erdbeeren, verhält sich dabei unter den Druckwechselvorgängen mit einem vorbestimmten Hub $\Delta P$ (=$P_1$-$P_2$) schwammähnlich. D.h. bei einer Druckerhöhung auf $P_1$ wird Luft und Fruchtwasser mit niedrigem Zuckergehalt von z.B. 10 % aus dem stückigen Gut herausgepreßt und bei der Entspannung durch Druckverringerung auf $P_2$ die umgebende Siruplösung mit hohem Zuckergehalt von z.B. 60 % in das stückige Gut eingesaugt. Diese Kandierung ist gleichbedeutend mit einer Verfestigung des Fruchtfleisches und einer höheren Stückigkeit des Produktes.

Diese Druckwechsel finden im Bereich zwischen Vakuum und Umgebungsdruck statt und können sich über alle Zubereitungsphasen erstrecken. Abhängig von der Konsistenz und Qualität der eingebrachten Gutmenge kann man mit den Druckwechseln in der Aufheizphase bei einer Temperatur von z.B. 60°C, bei der die Gutmenge flüssig genug ist, beginnen, und sie dann bis zu einer Temperatur von z.B. 70°C in der Kühlphase fortsetzen.

Die dabei auftretende Temperaturdifferenz erklärt sich dadurch, daß die Wirkung der Druckwechselvorgänge von der Konsistenz der Gutmenge abhängt, d.h. daß Druckwechselvorgänge bei fester Konsistenz kaum Wirkung zeigen, wobei in der Abkühlphase das Gut bei vergleichbarer Temperatur eine bereits wesentlich höhere Stückigkeit und damit fester Konsistenz besitzt.

Die Vorrichtung mit dem Behälter 1 ist mit einem separaten Kocher 30 versehen der an dem Zulauf 9 des Behälters 1 mit einem Ablauf 33 über eine Leitung 34 verbunden ist.

Der separate Kocher weist einen im wesentlichen zylindrischen geschlossenen Behälter 32 aus Metall auf. Sein Mantel ist als Doppelmantel 35 ausgebildet, der über Zu- und Ablauf 37, 39 mit in der Zeichnung nicht näher dargestellten Ventilen mit einem Heizmedium, z.B. Heißdampf, durchströmt werden kann.

Innenliegend ist in dem Behälter 32 eine drehbare Rohrschlange 41 angeordnet, die über ihren Zu- und Ablauf 43, 45 ebenfalls von einem Heizmedium durchflossen werden kann. Die Rohrschlange 41 wird durch einen außenliegenden Motor 46 rotierend über eine nicht näher bezeichnete Welle mit Zwischengetriebe angetrieben und dient so gleichzeitig zum Rühren und Heizen der über eine verschließbare Öffnung 47 einbringbaren Gutmenge.

Nach dem Vorkochen auf eine bestimmte Temperatur von z.B. 70°C wird die Gutmenge über die Leitung 34 in den Behälter 1 eingedrückt und/oder eingesaugt. Dies erfolgt z.B. durch eine in der Zeichnung nicht näher dargestellt Pumpe in der Leitung 34.

Die Weiterbehandlung der Gutmenge erfolgt dann in dem Behälter 1 wie oben beschrieben.

Durch die im Vergleich zum Behälter 1 wesentlich größere Heizfläche ergibt sich ein geringere Aufheizzeit, z.B. um den Faktor 5 verringert, woraus vorteilhafterweise eine kürzere Chargenzeit folgt.

Durch die Verwendung des separaten Kochers 30 kann sich auch eine Vereinfachung des Behälter 1 ergeben. Beispielsweise kann der Heizmantel 3 im unteren Bereich weniger aufwendig gestaltet werden, bzw. gänzlich entfallen.

**Patentansprüche**

1. Verfahren zur Herstellung von Lebensmittelzubereitungen, insbesondere Fruchtzubereitungen, durch Erhitzen und anschließendes Kühlen unter gleichzeitigem Mischen und Druckwechselvorgang einer aus einem Fluid und stückigem Gut bestehenden Gutmenge,
dadurch gekennzeichnet, daß

    die Gutmenge vor der Endzubereitung in einem geschlossenen Behälter (1) mittels eines separaten Kochers (30) vorgeheizt wird,

    daß durch mehrere Druckwechselvorgänge mit einem vorbestimmten Hub ($\Delta$P) nach einer vorbestimmten Zeitabhängigkeit eine Aufnahme des Fluids in das stückige Gut erreicht wird.

2. Verfahren nach Anspruch 1,
dadurch gekennzeichnet,

    daß der Druckwechsel periodisch erfolgt.

3. Verfahren nach Anspruch 1 oder 2,
dadurch gekennzeichnet,

    daß der Druckwechsel mit vorbestimmter Flankensteigung erfolgt.

4. Verfahren nach einem oder mehreren der vorhergehenden Ansprüche,
dadurch gekennzeichnet, daß

    die Druckwechselvorgänge während der Heiz- und/oder Kühlphase erfolgen.

5. Vorrichtung zur Herstellung von Lebensmittelzubereitungen, insbesondere Fruchtzubereitungen, mit einem beheiz- und/oder kühlbaren geschlossenen Behälter und einem Rührsystem,
dadurch gekennzeichnet,

    daß die Vorrichtung einen von dem geschlossenen Behälter (1) separaten Kocher (30) aufweist und
    daß eine steuerbare Einheit zur Veränderung des Drucks im Behälter (1) vorgesehen ist.

6. Vorrichtung nach Anspruch 5,
dadurch gekennzeichnet,

    daß die Einheit zur Druckveränderung als steuerbare vor- und/oder rückwärtslaufende Pumpe (29) ausgeführt ist.

7. Vorrichtung nach Anspruch 5 oder 6,
dadurch gekennzeichnet,

    daß die Einheit zur Druckveränderung ein steuerbares Ventil (31) aufweist.

8. Vorrichtung nach einem der Ansprüche 5 bis 7,
dadurch gekennzeichnet,

    daß die Einheit zur Druckveränderung einen Drucksensor zur Messung des Drucks im Behälter aufweist.

9. Vorrichtung nach Anspruch 5,
dadurch gekennzeichnet,

    daß in dem separaten Kocher (30) innenliegend ein Heizelement eingebaut ist, das als Heizorgan und Rührwerk dient.

10. Vorrichtung nach Anspruch 9,
dadurch gekennzeichnet,

    daß das Heizelement als Rohrschlange (41) ausgebildet ist.

11. Vorrichtung nach einem der Ansprüche 9 und 10,
dadurch gekennzeichnet,

    daß der separate Kocher (30) einen beheizbaren Doppelmantel (35) aufweist.

12. Vorrichtung nach einem der Ansprüche 5 bis 11,
dadurch gekennzeichnet,

    daß der geschlossene Behälter (1) am Behälterboden einen Ein- und Auslaß (9, 11) aufweist.

13. Vorrichtung nach einem der Ansprüche 5 bis 12,
dadurch gekennzeichnet,

    daß im Behälter (1) über dem Gut ein im Oberboden (18) exzentrisch angeordneter Ventilator (25) vorgesehen ist, der auftretende Brüden zur Innenfläche des Behälters (1) hin- und von dieser Innenfläche wegbewegt.

14. Vorrichtung nach einem der Ansprüche 5 bis 13,
dadurch gekennzeichnet,

    daß das Rührsystem (19) für das Gut im Behälter zentrisch im Oberboden angeordnet ist.

15. Vorrichtung nach Anspruch 14,
dadurch gekennzeichnet,

    daß der Behälter mindestens einen starren Stromstörer aufweist.

16. Vorrichtung nach Anspruch 14 oder 15,
dadurch gekennzeichnet,

    daß das Rührsystem (19) als Ankerrührwerk ausgebildet ist.

17. Vorrichtung nach Anspruch 14 oder 15,

dadurch gekennzeichnet,

daß das Rührsystem (19) als koaxiales Rührsystem ausgebildet ist.

18. Vorrichtung nach Anspruch 17,
dadurch gekennzeichnet,

daß das koaxiale Rührsystem als Ankerrührwerk mit mindestens einem gleich- oder gegenläufigen Stromstörer ausgebildet ist.

19. Vorrichtung nach Anspruch 18,
dadurch gekennzeichnet,

daß der mindestens eine Stromstörer als Spirale ausgebildet ist.

**Claims**

1. Method for the production of food preparations, in particular fruit preparations, by heating and then cooling with simultaneous mixing and pressure changing operation of a product quantity consisting of a fluid and product pieces, characterised in that the product quantity is preheated before final preparation in a closed receptacle (1) by means of a separate cooker (30), in that incorporation of the fluid into the product pieces is achieved by several pressure changing operations with a predetermined stroke (ΔP) according to a predetermined time function.

2. Method according to claim 1, characterised in that pressure changing takes place periodically.

3. Method according to claim 1 or 2, characterised in that pressure changing takes place with a predetermined flank gradient.

4. Method according to one or more of the preceding claims, characterised in that the pressure changing operations take place during the heating and/or cooling stage.

5. Apparatus for the production of food preparations, in particular fruit preparations, with a heatable and/or coolable closed receptacle and an agitating system, characterised in that the apparatus comprises a cooker (30) separate from the closed receptacle (1) and in that a controllable unit is provided for varying the pressure in the receptacle (1).

6. Apparatus according to claim 5, characterised in that the unit for varying the pressure is designed as a controllable forward and/or backward running pump (29).

7. Apparatus according to claim 5 or 6, characterised in that the unit for varying the pressure comprises a controllable valve (31).

8. Apparatus according to any of claims 5 to 7, characterised in that the unit for varying the pressure comprises a pressure sensor for measuring the pressure in the receptacle.

9. Apparatus according to claim 5, characterised in that in the separate cooker (30) internally is fitted a heating element which serves as a heating member and agitator.

10. Apparatus according to claim 9, characterised in that the heating element is constructed as a pipe coil (41).

11. Apparatus according to either of claims 9 and 10, characterised in that the separate cooker (30) comprises a heatable double jacket (35).

12. Apparatus according to any of claims 5 to 11, characterised in that the closed receptacle (1) comprises on the receptacle bottom an inlet and outlet (9, 11).

13. Apparatus according to any of claims 5 to 12, characterised in that in the receptacle (1) above the product is provided a fan (25) which is arranged eccentrically in the top (18) and which moves vapours arising towards and away from the inner surface of the receptacle (1).

14. Apparatus according to any of claims 5 to 13, characterised in that the agitating system (19) for the product in the receptacle is arranged centrally in the top.

15. Apparatus according to claim 14, characterised in that the receptacle comprises at least one rigid agitator baffle.

16. Apparatus according to claim 14 or 15, characterised in that the agitating system (19) is designed as an anchor agitator.

17. Apparatus according to claim 14 or 15, characterised in that the agitating system (19) is designed as a coaxial agitating system.

18. Apparatus according to claim 17, characterised in that the coaxial agitating system is designed as an anchor agitator with at least one baffle running in the same or the opposite direction.

19. Apparatus according to claim 18, characterised in that the at least one baffle is designed as a spiral.

## Revendications

1. Procédé pour réaliser des préparations alimentaires, notamment des préparations à base de fruits, par chauffage puis refroidissement moyennant simultanément un mélange et un processus d'alternance de compression d'une quantité de matière formée d'un fluide et d'une matière en morceaux, caractérisé en ce

   qu'on préchauffe la quantité de matière avant la préparation finale dans un récipient fermé (1) au moyen d'un appareil de cuisson séparée (30),
   qu'au moyen de plusieurs processus d'alternance de compression avec une course prédéterminée (ΔP) on obtient, selon une fonction temporelle prédéterminée, une absorption du fluide dans la matière en morceaux.

2. Procédé selon la revendication 1, caractérisé en ce

   qu'on effectue l' alternance de compression d'une manière périodique.

3. Procédé selon la revendication 1 ou 2, caractérisé en ce

   que l'alternance de compression est réalisée avec une pente prédéterminée des flancs.

4. Procédé selon une ou plusieurs des revendications précédentes, caractérisé en ce que

   les processus d'alternance de compression s'effectuent pendant la phase de chauffage et/ou de refroidissement.

5. Dispositif pour réaliser des préparations alimentaires, notamment des préparations a base de fruits, comportant un récipient fermé pouvant être chauffé et/ou pouvant être refroidi et un système agitateur, caractérisé en ce

   que le dispositif comporte un appareil de cuisson (30) séparé du récipient fermé (1), et qu'il est prévu une unité commandable servant a modifier la pression dans le récipient (1).

6. Dispositif selon la revendication 5, caractérisé en ce

   que l'unité de modification de pression est agencée sous la forme d'une pompe à alternance commandable (29).

7. Dispositif selon la revendication 5 ou 6, caractérisé en ce

   que l'unité de modification de pression comprend une soupape commandable (31).

8. Dispositif selon l'une des revendications 5 à 7, caractérisé en ce

   que l'unité de modification de pression comporte un capteur de pression pour mesurer la pression dans le récipient.

9. Dispositif selon la revendication 5, caractérisé en ce qu'à l'intérieur de l'appareil de cuisson séparé (30) est intégré un élément chauffant, qui agit en tant qu'organe de chauffage et organe agitateur.

10. Dispositif selon la revendication 9, caractérisé en ce

    que l'élément chauffant est agencé sous la forme d'un serpentin tubulaire (41).

11. Dispositif selon l'une des revendications 9 et 10, caractérisé en ce

    que l'appareil de cuisson séparé (30) comporte une enveloppe double (35) pouvant être chauffée.

12. Dispositif selon l'une des revendications 5 à 11, caractérisé en ce

    que le récipient fermé (1) comporte, au niveau de son fond, une entrée et une sortie (9, 11).

13. Dispositif selon l'une des revendications 5 à 12, caractérisé en ce

    que dans le récipient (1) est prévu, au-dessus de la matière, un ventilateur (25), qui est disposé d'une manière excentrée dans le plafond (18) qui déplace des vapeurs chaudes, qui apparaissent, en direction de la surface intérieure du récipient (1), et les écarte de cette surface intérieure.

14. Dispositif selon l'une des revendications 5 à 13, caractérisé en ce

    que le système agitateur (19) pour la matière est disposé dans le récipient, dans une position centrée dans le plafond.

15. Dispositif selon la revendication 14, caractérisé en ce

    que le récipient comporte au moins un brise-lames.

**16.** Dispositif selon la revendication 14 ou 15, caractérisé en ce

que le système d'agitation (19) est agencé sous la forme d'un agitateur à ancres croisées.

**17.** Dispositif selon la revendication 14 ou 15, caractérisé en ce

que le système agitateur (19) est réalisé sous la forme d'un système agitateur coaxial.

**18.** Dispositif selon la revendication 17, caractérisé en ce

que le système agitateur coaxial est agencé sous la forme d'un agitateur à ancres croisées comportant au moins un brise-lames agissant dans le même sens ou en sens opposé.

**19.** Dispositif selon la revendication 18, caractérisé en ce

que l'au moins un brise-lames est agencé avec une forme spirale.

FIG.1